(19) Europäisches Patentamt
European Patent Office
Office européen des brevets

(11) **EP 4 621 902 A1**

(12) **EUROPEAN PATENT APPLICATION**

(43) Date of publication:
**24.09.2025 Bulletin 2025/39**

(21) Application number: **24222032.5**

(22) Date of filing: **20.12.2024**

(51) International Patent Classification (IPC):
***H01M 10/0525*** *(2010.01)* ***H01M 10/0567*** *(2010.01)*

(52) Cooperative Patent Classification (CPC):
**H01M 10/0567; H01M 4/525; H01M 4/587; H01M 10/0525;** H01M 2300/0025

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.03.2024 KR 20240038653**

(71) Applicant: **SAMSUNG SDI CO., LTD.**
**Yongin-si, Gyeonggi-do 17084 (KR)**

(72) Inventors:
- **Son, Seunghyeon**
  **17084 Yongin-si, Gyeonggi-do (KR)**
- **Yu, Arum**
  **17084 Yongin-si, Gyeonggi-do (KR)**
- **Kim, Sanghoon**
  **17084 Yongin-si, Gyeonggi-do (KR)**
- **Bae, Tae Hyon**
  **17084 Yongin-si, Gyeonggi-do (KR)**
- **Lee, Harim**
  **17084 Yongin-si, Gyeonggi-do (KR)**
- **Kim, Sanghyung**
  **17084 Yongin-si, Gyeonggi-do (KR)**
- **Shin, Youngkyeong**
  **17084 Yongin-si, Gyeonggi-do (KR)**

(74) Representative: **Gulde & Partner**
**Patent- und Rechtsanwaltskanzlei mbB**
**Berliner Freiheit 2**
**10785 Berlin (DE)**

(54) **ELECTROLYTES FOR RECHARGEABLE LITHIUM BATTERIES AND RECHARGEABLE LITHIUM BATTERIES INCLUDING THE SAME**

(57) There is provided an electrolyte for a rechargeable lithium battery. The electrolyte includes a non-aqueous organic solvent, a lithium salt, and an additive. The additive includes a first additive represented by Chemical Formula 1 and a second additive represented by Chemical Formula 2:

Chemical Formula 1

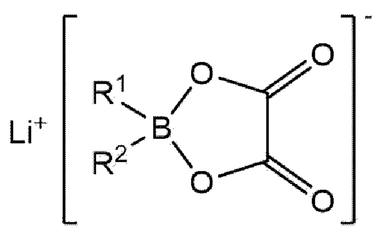

Chemical Formula 2

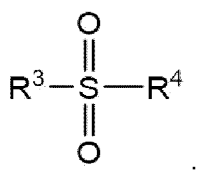

EP 4 621 902 A1

## Description

## BACKGROUND

### 1. Field

Embodiments of the present disclosure described herein are related to electrolytes for rechargeable lithium batteries and rechargeable lithium batteries including the same.

### 2. Description of the Related Art

A rechargeable lithium battery may be recharged and has three or more times as high energy density per unit weight as a lead storage battery, nickel-cadmium battery, nickel hydrogen battery, nickel zinc battery and/or the like. That is, a rechargeable lithium battery can be recharged and possesses an energy density that is at least three times greater per unit of weight compared to comparable batteries such as lead-acid, nickel-cadmium, nickel-metal hydride, or nickel-zinc types. It may be also charged at a higher rate and thus, is commercially manufactured for a laptop, a cell phone, an electric tool, an electric bike, and/or the like, and research on improvement of additional energy density have been actively made. That is, the rechargeable lithium battery may also be charged more rapidly, making it a popular choice for commercial production in devices like laptops, cell phones, electric tools, and/or electric bicycles. Here, active research is also underway to further enhance its energy density.

A rechargeable lithium battery is manufactured by injecting an electrolyte into an electrode assembly, which includes a positive electrode including a positive electrode active material capable of intercalating/deintercalating lithium ions and a negative electrode including a negative electrode active material capable of intercalating/deintercalating lithium ions.

During the charging process of a rechargeable lithium battery, if (e.g., when) lithium ions fail to intercalate into the negative electrode active material and are reduced, lithium dendrites may grow on the surface of the negative electrode. Lithium dendrites cause internal short circuit and/or deterioration of rechargeable lithium batteries, and if the charging voltage is increased and/or charged rapidly, the growth of lithium dendrites may increase.

As a method for suppressing or reducing the growth of lithium dendrites, it is suitable to use a low-viscosity ester-based solvent as an electrolyte solvent. However, the ester-based solvent has weak oxidation resistance and may cause deterioration of the rechargeable lithium battery if charged at high voltage (for example, 4.5 V or higher).

## SUMMARY

The invention is defined by the appended claims. The description that follows is subjected to this limitation. Any disclosure lying outside the scope of said claims is only intended for illustrative as well as comparative purposes.

Aspects according to one or more embodiments are directed toward an electrolyte for a rechargeable lithium battery which can suppress or reduce the growth of lithium dendrites and/or the deterioration of the rechargeable lithium battery even if the charging voltage is increased and/or rapidly charged.

Additional aspects will be set forth in part in the description which follows and, in part, will be apparent from the description, or may be learned by practice of the presented embodiments of the present disclosure.

According to one or more embodiments, an electrolyte for a rechargeable lithium battery includes a non-aqueous organic solvent; a lithium salt; and an additive; wherein the additive includes a first additive represented by Chemical Formula 1, and a second additive represented by Chemical Formula 2:

Chemical Formula 1

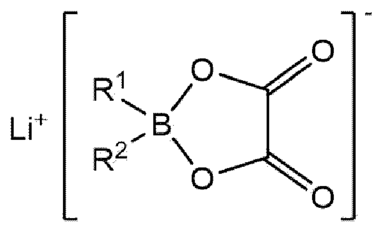

Chemical Formula 2

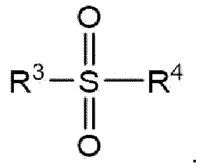

According to one or more embodiments, a rechargeable lithium battery includes an electrolyte for a rechargeable lithium battery.

## BRIEF DESCRIPTION OF THE DRAWINGS

FIGS. 1-4 are schematic views each showing rechargeable lithium batteries according to one or more embodiments.

## DETAILED DESCRIPTION

Hereinafter, embodiments will be described in more detail. However, these embodiments are examples, the present disclosure is not limited thereto and the present disclosure is defined by the scope of claims.

As used herein, if specific definition is not otherwise provided, it will be understood that if an element such as a layer, film, region, or substrate is referred to as being "on" another element, it can be directly on the other element or intervening elements may also be present.

As used herein, if specific definition is not otherwise provided, the singular may also include the plural.

As utilized herein, expressions such as "at least one of", "one of", and "of (e.g., selected from among)", when preceding a list of elements, modify the entire list of elements and do not modify the individual elements of the list. For example, "at least one of a, b or c", "at least one selected from among a, b and c", and/or the like, may indicate only a, only b, only c, both (e.g., simultaneously) a and b, both (e.g., simultaneously) a and c, both (e.g., simultaneously) b and c, all of a, b, and c, or variations thereof.

The term utilized herein is intended to describe only a specific embodiment and is not intended to limit the present disclosure. As utilized herein, the singular forms "a," "an," and "the" are intended to include the plural forms, including "at least one," unless the content (e.g., amount) clearly indicates otherwise. "At least one" should not be construed as being limited to the singular. As utilized herein, the term "and/or" includes any and all combinations of one or more of the associated listed items. The terms "includes," "including," "comprises," and/or "comprising," when utilized in the detailed description, specify a presence of stated features, regions, integers, steps, operations, elements, and/or components, but do not preclude the presence or addition of one or more other features, regions, integers, steps, operations, elements, components, and/or groups thereof.

Spatially relative terms such as "beneath," "below," "lower," "above," and "upper" may be utilized herein to easily describe one element or feature's relationship to another element or feature. It will be understood that the spatially relative terms are intended to encompass different orientations of a device in utilize or operation in addition to the orientation illustrated in the drawings. For example, when a device in the drawings is turned over, elements described as "below" or "beneath" other elements or features would then be "above" or "over" the other elements or features. In some embodiments, the example term "below" may encompass both (e.g., simultaneously) orientations of above and below. The device may be otherwise oriented (rotated 90 degrees or at other orientations), and the spatially relative terms utilized herein may be interpreted accordingly.

In the context of the present application and unless otherwise defined, the terms "use," "using," and "used" may be considered synonymous with the terms "utilize," "utilizing," and "utilized," respectively.

Further, the use of "may" when describing embodiments of the inventive concept refers to "one or more embodiments of the inventive concept." Also, the term "exemplary" is intended to refer to an example or illustration.

As used herein, "combination thereof" may refer to a mixture of constituents, a stack, a composite, a copolymer, an alloy, a blend, and a reaction product.

As used herein, if specific definition is not otherwise provided, "substituted" refers to replacement of at least one hydrogen atom of a substituent from among a halogen atom (F, Cl, Br, or I), a hydroxyl group, a C1 to C20 alkoxy group, a nitro group, a cyano group, an amine group, an imino group, an azido group, an amidino group, a hydrazino group, a hydrazono group, a carbonyl group, a carbamyl group, a thiol group, an ester group, an ether group, a carboxyl group or a salt thereof, a sulfonic acid group or a salt thereof, a phosphoric acid or a salt thereof, a C1 to C20 alkyl group, a C2 to C20 alkenyl group, a C2 to C20 alkynyl group, a C6 to C30 aryl group, a C3 to C20 cycloalkyl group, a C3 to C20 cycloalkenyl group, a C3 to C20 cycloalkynyl group, a C2 to C20 heterocycloalkyl group, a C2 to C20 heterocycloalkenyl group, and a

C2 to C20 heterocycloalkynyl group.

As used herein, if specific definition is not otherwise provided, "heterocycloalkyl group," "heterocycloalkenyl group," "heterocycloalkynyl group," and "heterocycloalkylene group" refers to that at least one heteroatom of N, O, S or P is present in the ring compound of cycloalkyl, cycloalkenyl, cycloalkynyl, and cycloalkylene, respectively.

In chemical formulas of the present specification, unless a specific definition is otherwise provided, hydrogen is bonded at the position if a chemical bond is not drawn where supposed to be given.

**Electrolyte**

One or more embodiments include an electrolyte for a rechargeable lithium battery including a non-aqueous organic solvent; a lithium salt; and an additive; wherein the additive includes a first additive represented by Chemical Formula 1, and a second additive represented by Chemical Formula 2:

Chemical Formula 1

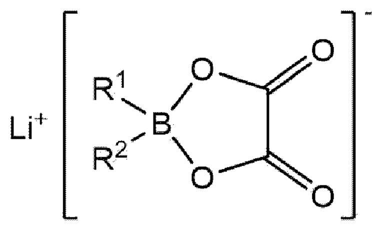

Chemical Formula 2

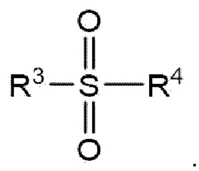

The electrolyte for a rechargeable lithium battery according to one or more embodiments can suppress or reduce the growth of lithium dendrites and/or the deterioration of the rechargeable lithium battery even if the charging voltage is increased and/or rapidly charged.

**Electrolyte Additive**

**First Additive**

The first additive represented by Chemical Formula 1 includes a lithium oxalato borate-based compound substituted with a halogen group (e.g., fluoro group), and in a high-voltage environment, the halogen group can stabilize lithium salt (e.g., $LiPF_6$).

Accordingly, if an electrolyte including the first additive is used, the generation of HF can be suppressed or reduced, preventing or reducing elution of transition metals from the positive electrode active material and damage to the SEI film at the interface between the negative electrode and the electrolyte.

In Chemical Formula 1, $R^1$ and $R^2$ are each independently a halogen; or an alkyl group having 1 to 20 carbon atoms substituted or unsubstituted with a halogen.

Desirably, $R^1$ and $R^2$ may each independently be a fluoro group; or an alkyl group having 1 to 10 carbon atoms substituted or unsubstituted with a fluoro group.

For example, $R^1$ and $R^2$ may both (e.g., simultaneously) be fluoro groups.

Examples of the first additive are as follows:

Chemical Formula 1-1

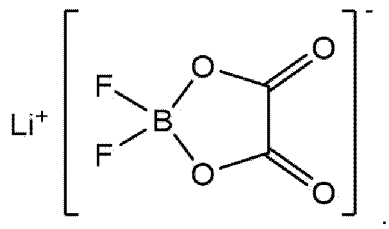

The first additive may be included in an amount of 0.1 wt% to 10 wt%, 0.5 wt% to 7 wt%, or 1 to 5 wt%, based on a total amount of the electrolyte. Within this range, the electrolyte including the first additive can effectively inhibit or reduce the formation and growth of lithium dendrites.

**Second Additive**

The second additive represented by Chemical Formula 2 includes a diaryl sulfate-based compound and may suppress or reduce the formation and growth of lithium dendrites compared to dialkyl sulfate-based compounds or dialkenyl sulfate-based compounds.
Accordingly, the second additive can suppress or reduce the formation and growth of lithium dendrites on the negative electrode surface and allow lithium ions to be evenly intercalated in the negative electrode active material.
In Chemical Formula 2, $R^3$ and $R^4$ are each independently a substituted or unsubstituted aryl group having 6 to 20 carbon atoms.
Desirably, $R^3$ and $R^4$ may each independently be a substituted or unsubstituted aryl group having 6 to 10 carbon atoms.
For example, $R^3$ and $R^4$ may both (e.g., simultaneously) be phenyl groups.
Examples of the second additive are as follows:

Chemical Formula 2-1

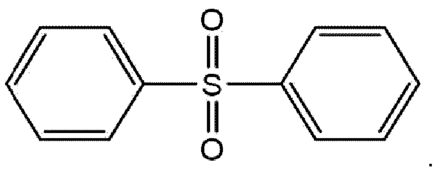

The first additive may be included in an amount of 0.1 wt% to 10 wt%, 0.5 wt% to 7 wt%, or 1 wt% to 5 wt%, based on a total amount of the electrolyte. Within this range, the electrolyte including the second additive can effectively inhibit or reduce formation and growth of lithium dendrites.

Amount Ratio (Weight Ratio) of First Additive and Second Additive

The weight ratio of the first additive and the second additive may be 10:1 to 1:10, 5:1 to 1:5 or 2:1 to 1:2. Within this range, the effects of the first additive and the second additive are in desirable harmony, suppressing or reducing the growth of lithium dendrites and/or the deterioration of the rechargeable lithium battery even if the charging voltage is increased and/or rapidly charged.

**Third Additive**

The additive may further include other compounds (hereinafter referred to as "third additives") in addition to the first additive and the second additive.
The third additive may further include cyclic carbonate, succinonitrile (SN), adiponitrile (AN), 1 ,3,6-hexane tricyanide (HTCN), propenesultone (PST), propanesultone (PS), lithium tetrafluoroborate ($LiBF_4$), lithium difluorophosphate ($LiPO_2F_2$), 2-fluoro biphenyl (2-FBP), and/or a (e.g., any suitable) combination thereof.
The cyclic carbonate may be, for example, vinylethylene carbonate (VEC), vinylene carbonate (VC), ethylene carbonate, a derivative thereof, and/or a (e.g., any suitable) combination thereof. The derivative of ethylene carbonate may include, for example, fluoroethylene carbonate (FEC), difluoroethylene carbonate, chloroethylene carbonate,

dichloroethylene carbonate, bromoethylene carbonate, dibromoethylene carbonate, nitroethylene carbonate, cyanoethylene carbonate, and/or the like.

The third additive may be included in an amount of 0.1 wt% to 10 wt%, 0.5 wt% to 9 wt%, 1 wt% to 8 wt%, 1 wt% to 7 wt%, 1 wt% to 6 wt%, or 2 wt% to 5 wt%, based on 100 wt% of a total amount of the electrolyte. When the amount of the third additive satisfies the above range, cycle-life characteristics can be improved and the gas generation amount and resistance increase rate can be effectively controlled or selected without adversely affecting the battery.

**Non-aqueous Organic Solvent**

The non-aqueous organic solvent serves as a medium for transmitting ions taking part in the electrochemical reaction of a battery.

The non-aqueous organic solvent may be a carbonate-based, ester-based, ether-based, ketone-based, alcohol-based solvent, aprotic solvent, and/or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), ethylmethyl carbonate (EMC), ethylene carbonate (EC), propylene carbonate (PC), butylene carbonate (BC), and/or the like. The ester-based solvent may include methyl acetate, ethyl acetate, n-propyl acetate, dimethylacetate, methylpropionate, ethyl propionate, propyl propionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. The ketone-based solvent may include cyclohexanone. The alcohol-based solvent may include ethyl alcohol, isopropyl alcohol, and/or the like, and the aprotic solvent may include nitriles such as R-CN (wherein R is a C2 to C20 linear, branched, or cyclic hydrocarbon group, a double bond, an aromatic ring, or an ether group), amides such as dimethylformamide, dioxolanes such as 1 ,3-dioxolane or 1,4-dioxolane, sulfolanes, and/or the like.

The non-aqueous organic solvent may be used alone or in combination of two or more.

Additionally, if using a carbonate-based solvent, cyclic carbonate and chain carbonate can be mixed and used, and cyclic carbonate and chain carbonate may be mixed at a volume ratio of 1:1 to 1:9.

For example, the non-aqueous organic solvent may include ethylene carbonate (EC), propylene carbonate (PC), and propyl propionate (PP).

Based on a total volume of the non-aqueous organic solvent, the ethylene carbonate (EC) may be included in an amount of 1 volume% to 20 volume%, 1 volume% to 15 volume%, or 5 volume% to 15 volume%; the propylene carbonate (PC) may be included in an amount of 5 volume% to 30 volume%, 5 volume% to 20 volume%, or 10 volume% to 20 volume%; and the propyl propionate (PP) may be included in an amount of 50 volume% to 90 volume%, 65 volume% to 80 volume%, or 70 volume% to 80 volume%.

**Lithium Salt**

The lithium salt dissolved in the organic solvent supplies lithium ions in a battery, enables a basic operation of a rechargeable lithium battery, and improves transportation of the lithium ions between positive and negative electrodes. Examples of a lithium salt may include one or more than one selected from among $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (x and y are integers from 1 to 20), lithium trifluoromethane sulfonate, lithium tetrafluoroethanesulfonate, lithium difluorobis(oxalato)phosphate, (LiDFOB), and lithium bis(oxalato)borate (LiBOB).

For example, $LiPF_6$ can be used as the lithium salt.

A molar concentration of lithium salt in the electrolyte may be 1.0 M to 2.0 M.

**Rechargeable Lithium Battery**

One or more embodiments include a rechargeable lithium battery including the aforementioned electrolyte for a rechargeable lithium battery.

By including the aforementioned electrolyte for a rechargeable lithium battery according to one or more embodiments, growth of lithium dendrites and/or deterioration of the rechargeable lithium battery can be suppressed or reduced even if a charging voltage is increased and/or rapidly charged.

Hereinafter, the configuration of the rechargeable lithium battery will be described in more detail, and descriptions that overlap with the above will not be provided.

**Upper Charging Limit Voltage**

When a rechargeable lithium battery is charged at high voltage, the amount of elution of transition metal ions in

the positive electrode active material increases.

However, if a robust film is formed on the surface of the positive electrode using the aforementioned electrolyte according to one or more embodiments, the elution of transition metal ions in the positive electrode active material may be suppressed or reduced even if charged at high voltage.

For example, the upper charging limit voltage of the rechargeable lithium battery may be greater than or equal to 4.3 V, greater than or equal to 4.4 V, or greater than or equal to 4.45 V.

**Positive Electrode Active Material**

The positive electrode active material may be a compound (lithiated intercalation compound) capable of intercalating and deintercalating lithium. For example, one or more types (kinds) of composite oxides of lithium and a metal selected from among cobalt, manganese, nickel, and/or one or more (e.g., any suitable) combinations thereof may be used.

The composite oxide may be a lithium transition metal composite oxide, and specific examples may include lithium nickel-based oxide, lithium cobalt-based oxide, lithium manganese-based oxide, a lithium iron phosphate-based compound, cobalt-free lithium nickel-manganese-based oxide, and/or a (e.g., any suitable) combination thereof.

As an example, a compound represented by any one selected from among the following chemical formulas may be used: $Li_aA_{1-b}X_bO_{2-c}D_c$ ($0.90\leq a\leq 1.8$, $0\leq b\leq 0.5$, $0\leq c\leq 0.05$); $Li_aMn_{2-b}X_bO_{4-c}D_c$ ($0.90\leq a\leq 1.8$, $0\leq b\leq 0.5$, $0\leq c\leq 0.05$); $Li_aNi_{1-b-c}Co_bX_cO_{2-\alpha}D_\alpha$ ($0.90\leq a\leq 1.8$, $0\leq b\leq 0.5$, $0\leq c\leq 0.5$, $0<\alpha<2$); $Li_aNi_{1-b-c}Mn_bX_cO_{2-\alpha}D_\alpha$ ($0.90\leq a\leq 1.8$, $0\leq b\leq 0.5$, $0\leq c\leq 0.5$, $0<\alpha<2$); $Li_aNi_bCo_cL^1_dG_eO_2$ ($0.90\leq a\leq 1.8$, $0\leq b\leq 0.9$, $0\leq c\leq 0.5$, $0\leq d\leq 0.5$, $0\leq e\leq 0.1$); $Li_aNiG_bO_2$ ($0.90\leq a\leq 1.8$, $0.001\leq b\leq 0.1$); $Li_aCoG_bO_2$ ($0.90\leq a\leq 1.8$, $0.001\leq b\leq 0.1$); $Li_aMn_{1-b}G_bO_2$ ($0.90\leq a\leq 1.8$, $0.001\leq b\leq 0.1$); $Li_aMn_2G_bO_4$ ($0.90\leq a\leq 1.8$, $0.001\leq b\leq 0.1$); $Li_aMn_{1-g}G_gPO_4$ ($0.90\leq a\leq 1.8$, $0\leq g\leq 0.5$); $Li_{(3-f)}Fe_2(PO_4)_3$ ($0\leq f\leq 2$); and $Li_aFePO_4$ ($0.90\leq a\leq 1.8$).

In the above chemical formulas, A is Ni, Co, Mn, and/or a (e.g., any suitable) combination thereof; X is Al, Ni, Co, Mn, Cr, Fe, Mg, Sr, V, a rare earth element, and/or a (e.g., any suitable) combination thereof; D is O, F, S, P, and/or a (e.g., any suitable) combination thereof; G is Al, Cr, Mn, Fe, Mg, La, Ce, Sr, V, and/or a (e.g., any suitable) combination thereof; and $L^1$ is Mn, Al, and/or a (e.g., any suitable) combination thereof.

The positive electrode active material may be, for example, a lithium nickel-based oxide represented by Chemical Formula 11, a lithium cobalt-based oxide represented by Chemical Formula 12, a lithium iron phosphate-based compound represented by Chemical Formula 13, a cobalt-free lithium nickel-manganese-based oxide represented by Chemical Formula 14, and/or a (e.g., any suitable) combination thereof.

Chemical Formula 11 $Li_{a1}Ni_{x1}M^1_{y1}M^2_{z1}O_{2-b1}X_{b1}$

In Chemical Formula 11, $0.9\leq a1\leq 1.8$, $0.3\leq x1\leq 1$, $0\leq y1\leq 0.7$, $0\leq z1\leq 0.7$, $0.9\leq x1+y1+z1\leq 1.1$, and $0\leq b1\leq 0.1$, $M^1$ and $M^2$ may each independently be one or more selected from among Al, B, Ba, Ca, Ce, Co, Cr, Cu, Fe, Mg, Mn, Mo, Nb, Si, Sn, Sr, Ti, V, W, and Zr, and X is one or more selected from among F, P, and S.

In Chemical Formula 11, $0.6\leq x1\leq 1$, $0\leq y1\leq 0.4$, and $0\leq z1\leq 0.4$, or $0.8\leq x1\leq 1$, $0\leq y1\leq 0.2$, and $0\leq z1\leq 0.2$.

Chemical Formula 12 $Li_{a2}Co_{x2}M^3_{y2}O_{2-b2}X_{b2}$

In Chemical Formula 12, $0.9\leq a2\leq 1.8$, $0.7\leq x2\leq 1$, $0\leq y2\leq 0.3$, $0.9\leq x2+y2\leq 1.1$, and $0\leq b2\leq 0.1$, $M^3$ is one or more selected from among Al, B, Ba, Ca, Ce, Cr, Cu, Fe, Mg, Mn, Mo, Ni, Se, Si, Sn, Sr, Ti, V, W, Y, Zn, and Zr, and X is one or more selected from among F, P, and S.

Chemical Formula 13 $Li_{a3}Fe_{x3}M^4_{y3}PO_{4-b3}X_{b3}$

In Chemical Formula 13, $0.9\leq a3\leq 1.8$, $0.6\leq x3\leq 1$, $0\leq y3\leq 0.4$, and $0\leq b3\leq 0.1$, $M^4$ is one or more selected from among Al, B, Ba, Ca, Ce, Co, Cr, Cu, Mg, Mn, Mo, Ni, Se, Si, Sn, Sr, Ti, V, W, Y, Zn, and Zr, and X is one or more selected from among F, P, and S.

Chemical Formula 14 $Li_{a4}Ni_{x4}Mn_{y4}M^5_{z4}O_{2-b4}X_{b4}$

In Chemical Formula 14, $0.9\leq a4\leq 1.8$, $0.8\leq x4<1$, $0<y4\leq 0.2$, $0\leq z4\leq 0.2$, $0.9\leq x4+y4+z4\leq 1.1$, and $0\leq b4\leq 0.1$, $M^5$ is one or more element selected from among Al, B, Ba, Ca, Ce, Cr, Fe, Mg, Mo, Nb, Si, Sn, Sr, Ti, V, W, and Zr, and X is one or more selected from among F, P, and S.

For example, the positive electrode active material may be lithium cobalt-based oxide represented by Chemical Formula 12, but the present disclosure is not limited thereto.

## Positive Electrode

The positive electrode for a rechargeable lithium battery may include a current collector and a positive electrode active material layer on the current collector. The positive electrode active material layer may include a positive electrode active material and may further include a binder and/or a conductive material.
For example, the positive electrode may further include an additive that can function as a sacrificial positive electrode.
An amount of the positive electrode active material may be 90 wt% to 99.5 wt%, and each amount of the binder and the conductive material may be 0.5 wt% to 5 wt% based on 100 wt% of the positive electrode active material layer.
The binder serves to attach the positive electrode active material particles well to each other and also to attach the positive electrode active material well to the current collector. Examples of the binder may include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and/or the like, but are not limited thereto.
The conductive material may be used to impart conductivity (e.g., electrical conductivity) to the electrode. Any material that does not cause chemical change (e.g., does not cause an undesirable chemical change in the rechargeable lithium battery) and conducts electrons may be used in the battery. Examples of the conductive material may include a carbon-based material such as natural graphite, artificial graphite, carbon black, acetylene black, ketjen black, a carbon fiber, a carbon nanofiber, and carbon nanotube; a metal-based material including copper, nickel, aluminum, silver, and/or the like, in a form of a metal powder or a metal fiber; a conductive polymer such as a polyphenylene derivative; and/or a (e.g., any suitable) mixture (e.g., combination) thereof.
The current collector may include Al, but the present disclosure is not limited thereto.

## Negative Electrode Active Material

The negative electrode active material may be a material that reversibly intercalates/deintercalates lithium ions, a lithium metal, a lithium metal alloy, a material capable of doping and dedoping lithium, or a transition metal oxide.
The material that reversibly intercalates/deintercalates lithium ions may include a carbon-based negative electrode active material, for example, crystalline carbon, amorphous carbon and/or a (e.g., any suitable) combination thereof. The crystalline carbon may be graphite such as non-shaped, plate-shaped, flake-shaped, sphere-shaped, or fiber-shaped natural graphite or artificial graphite. The amorphous carbon may be a soft carbon, a hard carbon, a mesophase pitch carbonization product, calcined coke, and/or the like.
The lithium metal alloy may include lithium and a metal selected from among Na, K, Rb, Cs, Fr, Be, Mg, Ca, Sr, Si, Sb, Pb, In, Zn, Ba, Ra, Ge, Al, and Sn.
The material capable of doping/dedoping lithium may be a Si-based negative electrode active material or a Sn-based negative electrode active material. The Si-based negative electrode active material may include silicon, a silicon-carbon composite, SiOx ($0 < x \leq 2$), a Si-Q alloy (wherein Q is selected from among an alkali metal, an alkaline-earth metal, a Group 13 element, a Group 14 element (excluding Si), a Group 15 element, a Group 16 element, a transition metal, a rare earth element, and/or a (e.g., any suitable) combination thereof). The Sn-based negative electrode active material may include Sn, $SnO_x$, e.g., $SnO_2$, a Sn-based alloy, and/or a (e.g., any suitable) combination thereof.
The silicon-carbon composite may be a composite of silicon and amorphous carbon. According to one or more embodiments, the silicon-carbon composite may be in a form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.
The silicon-carbon composite may further include crystalline carbon. For example, the silicon-carbon composite may include a core including crystalline carbon and silicon particles and an amorphous carbon coating layer on a surface of the core.
The Si-based negative electrode active material or the Sn-based negative electrode active material may be used in combination with a carbon-based negative electrode active material.

## Negative Electrode

A negative electrode for a rechargeable lithium battery includes a current collector and a negative electrode active material layer on the current collector. The negative electrode active material layer includes a negative electrode

active material and may further include a binder and/or a conductive material (e.g., an electron conductor).

For example, the negative electrode active material layer may include 90 wt% to 99 wt% of the negative electrode active material, 0.5 wt% to 5 wt% of the binder, and 0.5 wt% to 5 wt% of the conductive material.

The binder may serve to attach the negative electrode active material particles well to each other and also to attach the negative electrode active material well to the current collector. The binder may include a non-aqueous binder, an aqueous binder, a dry binder, and/or a (e.g., any suitable) combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, and/or a (e.g., any suitable) combination thereof.

The aqueous binder may be selected from among a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and/or a (e.g., any suitable) combination thereof.

When an aqueous binder is used as the negative electrode binder, it may further include a cellulose-based compound capable of imparting viscosity. The cellulose-based compound includes one or more of carboxymethyl cellulose, hydroxypropylmethyl cellulose, methyl cellulose, or alkali metal salts thereof. The alkali metal may be Na, K, or Li.

The dry binder may be a polymer material capable of being fiberized, and may be, for example, polytetrafluoroethylene, polyvinylidene fluoride, polyvinylidene fluoride-hexafluoropropylene copolymer, polyethylene oxide, and/or a (e.g., any suitable) combination thereof.

The conductive material is included to provide electrode conductivity, and any electrically conductive material may be used as a conductive material (e.g., a electron conductor) unless it causes a chemical change. Examples of the conductive material may be a carbon-based material such as natural graphite, artificial graphite, carbon black, acetylene black, ketjen black, a carbon fiber, a carbon nanofiber, a carbon nanotube, and/or the like; a metal-based material such as copper, nickel, aluminum silver, and/or the like in a form of a metal powder or a metal fiber; a conductive polymer such as a polyphenylene derivative; and/or a (e.g., any suitable) mixture thereof.

The negative electrode current collector may include one selected from among a copper foil, a nickel foil, a stainless steel foil, a titanium foil, a nickel foam, a copper foam, a polymer substrate coated with a conductive metal, and/or a (e.g., any suitable) combination thereof, but the present disclosure is not limited thereto.

**Separator**

Depending on the type or kind of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, and/or a (e.g., any suitable) combination thereof on one or both surfaces (e.g., opposite surfaces) of the porous substrate.

The porous substrate may be a polymer film formed of any one selected from among a polymer, or a copolymer or mixture of two or more of polyolefin such as polyethylene or polypropylene, a polyester such as polyethyleneterephthalate, or polybutyleneterephthalate, polyacetal, polyamide, polyimide, polycarbonate, polyether ketone, polyaryl ether ketone, polyether imide, polyamideimide, polybenzimidazole, polyether sulfone, polyphenyleneoxide, a cyclic olefin copolymer, polyphenylenesulfide, polyethylenenaphthalate, a glass fiber, TEFLON (tetrafluoroethylene), and polytetrafluoroethylene. I

The organic material may include a polyvinylidene fluoride-based polymer or a (meth)acrylic polymer.

The inorganic material may include inorganic particles selected from among $Al_2O_3$, $SiO_2$, $TiO_2$, $SnO_2$, $CeO_2$, MgO, NiO, CaO, GaO, ZnO, $ZrO_2$, $Y_2O_3$, SrTiOs, BaTiOs, $Mg(OH)_2$, boehmite, and/or a (e.g., any suitable) combination thereof, but the present disclosure is not limited thereto.

The organic material and the inorganic material may be mixed in one coating layer, or a coating layer including an organic material and a coating layer including an inorganic material may be stacked.

**Rechargeable Lithium Battery**

The rechargeable lithium battery may be classified into cylindrical, prismatic, pouch, or coin-type or kind batteries, and/or the like depending on their shape. FIGS. 1 to 4 are schematic views each illustrating a rechargeable

lithium battery according to one or more embodiments. FIG. 1 shows a circular battery, FIG. 2 shows a prismatic battery, and FIGS. 3 and 4 each show pouch-type or kind batteries. Referring to FIGS. 1 to 4, the rechargeable lithium battery 100 may include an electrode assembly 40 including a separator 30 between a positive electrode 10 and a negative electrode 20, and a case 50 in which the electrode assembly 40 is housed. The positive electrode 10, the negative electrode 20, and the separator 30 may be impregnated with an electrolyte. The rechargeable lithium battery 100 may include a sealing member 60 sealing the case 50 as shown in FIG. 1. In addition, in FIG. 2, the rechargeable lithium battery 100 may include a positive lead tab 11, a positive terminal 12, a negative lead tab 21, and a negative terminal 22. As shown in FIGS. 3 and 4, the rechargeable lithium battery 100 includes an electrode tab 70, that is, a positive electrode tab 71 and a negative electrode tab 72 serving as an electrical path for inducing the current formed in the electrode assembly 40 to the outside.

The rechargeable lithium battery according to one or more embodiments may be applied to automobiles, mobile phones, and/or one or more suitable types (kinds) of electrical devices, but the present disclosure is not limited thereto.

Hereinafter, examples of the present disclosure and comparative examples are described in more detail

**Example 1**

**(1) Preparation of Electrolyte**

$LiPF_6$ lithium salt was mixed at a concentration of 1.3 M in an organic solvent in which ethylene carbonate (EC), propylene carbonate (PC), and propyl propionate (PP) were mixed at a volume ratio of 10:15:75, and 1 wt% of the first additive represented by Chemical Formula 1-1 and 0.5 wt% of the second additive represented by Chemical Formula 2-1 were added thereto to prepare an electrolyte.

Chemical Formula 1-1

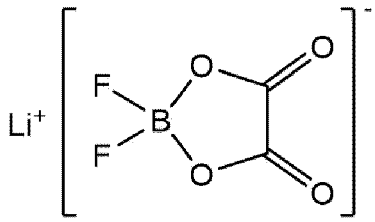

Lithium difluoro(oxalato)borate (Cas No.: 409071-16-5)

Chemical Formula 2-1

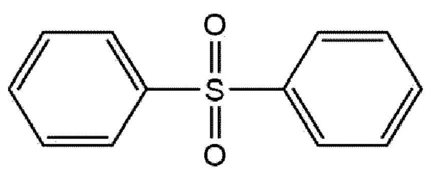

Diphenyl sulfone (Cas No.: 127-63-9)

In the electrolyte composition, "wt%" was based on a total amount of the electrolyte (lithium salt+non-aqueous organic solvent+additive. Hereinafter, the same as above was applied.

**(2) Manufacturing of Positive Electrode**

A positive electrode active material layer slurry was prepared by mixing 97.7 wt% of a $LiCoO_2$ positive electrode active material, 1.3 wt% of a polyvinylidene fluoride binder, and 1.0 wt% of a carbon nanotube conductive material, and was coated on an aluminum foil current collector, dried and pressed to manufacture a positive electrode.

### (3) Manufacturing of Negative Electrode

A negative electrode active material layer slurry was prepared by mixing 97.5 wt% of a graphite negative electrode active material, 1.5 wt% of carboxymethyl cellulose, and 1 wt% of styrene butadiene rubber in a water solvent. A negative electrode was manufactured by coating the negative electrode active material layer slurry on a copper foil current collector, drying, and pressing.

### (4) Manufacturing of Rechargeable Lithium Battery Cell

The positive and negative electrodes were assembled with a 25 μm-thick polyethylene separation membrane to manufacture an electrode assembly, the electrode assembly was housed in a prismatic case, and the electrolyte was implanted thereinto, manufacture a rechargeable lithium battery cell.

### Example 2

The electrolyte and rechargeable lithium battery cell of Example 2 were manufactured in substantially the same manner as Example 1, except that the amount of the second additive represented by Chemical Formula 2-1 was changed to 1 wt%.

### Example 3

The electrolyte and rechargeable lithium battery cell of Example 3 were manufactured in substantially the same manner as Example 1, except that the amount of the second additive represented by Chemical Formula 2-1 was changed to 2 wt%.

### Example 4

The electrolyte and rechargeable lithium battery cell of Example 4 were manufactured in substantially the same manner as Example 2, except that the amount of the first additive represented by Chemical Formula 1-1 was changed to 0.5 wt%.

### Example 5

The electrolyte and rechargeable lithium battery cell of Example 5 were manufactured in substantially the same manner as Example 2, except that the amount of the first additive represented by Formula 1-1 was changed to 2 wt%.

### Comparative Example 1 (Ref.)

The electrolyte and rechargeable lithium battery cell of Comparative Example 1 were manufactured in substantially the same manner as Example 1, except that no additives were added.

### Comparative Example 2

The electrolyte and rechargeable lithium battery cell of Comparative Example 2 were manufactured in substantially the same manner as Comparative Example 1, except that 0.5 wt% of the first additive represented by Chemical Formula 1-1 was added.

### Comparative Example 3

The electrolyte and rechargeable lithium battery cell of Comparative Example 3 were manufactured in substantially the same manner as Comparative Example 1, except that 1 wt% of the first additive represented by Chemical Formula 1-1 was added.

### Comparative Example 4

The electrolyte and rechargeable lithium battery cell of Comparative Example 4 were manufactured in substantially the same manner as Comparative Example 1, except that 2 wt% of the first additive represented by Chemical Formula 1-1 was added.

**Comparative Example 5**

The electrolyte and rechargeable lithium battery cell of Comparative Example 5 were manufactured in substantially the same manner as Comparative Example 1, except that 0.5 wt% of the second additive represented by Chemical Formula 1-2 was added.

**Comparative Example 6**

The electrolyte and rechargeable lithium battery cell of Comparative Example 6 were manufactured in substantially the same manner as Comparative Example 1, except that 1 wt% of the second additive represented by Chemical Formula 1-2 was added.

**Comparative Example 7**

The electrolyte and rechargeable lithium battery cell of Comparative Example 7 were manufactured in substantially the same manner as Comparative Example 1, except that 1.5 wt% of the second additive represented by Chemical Formula 1-2 was added.

For reference, the additive amount in each electrolyte of Examples 1 to 5 and Comparative Examples 1 to 7 is summarized in Table 1.

(Table 1)

| | Additive amount in electrolyte (wt%) | |
|---|---|---|
| | First additive | Second additive |
| Example 1 | 1 | 0.5 |
| Example 2 | 1 | 1 |
| Example 3 | 1 | 2 |
| Example 4 | 0.5 | 1 |
| Example 5 | 2 | 1 |
| Comparative Example 1 (Ref.) | 0 | 0 |
| Comparative Example 2 | 0.5 | 0 |
| Comparative Example 3 | 1 | 0 |
| Comparative Example 4 | 2 | 0 |
| Comparative Example 5 | 0 | 0.5 |
| Comparative Example 6 | 0 | 4 |
| Comparative Example 7 | 0 | 2 |

**Evaluation Example 1: Rapid Charging Characteristics of Rechargeable Lithium Battery Cell**

After charging and discharging the rechargeable lithium battery cells according to Examples 1 to 5 and Comparative Examples 1 to 7, under conditions of 25 °C, 3.0 C charge (CC/CV, 4.5V, 0.01 C Cut-off) /0.5C discharge (CC, 3.0 V Cut-off) for 400 cycles. Capacity retention rates (CRR) and DC-IR increase rates were calculated according to Equation 2. DC-IR in each cycle was calculated based on the voltage changed by discharging by applying a current of SOC 50C for 30 seconds.

Capacity retention rate [%] = (Discharge capacity after 400 cycles / Discharge capacity after 1 cycle) * 100     Equation 2

Equation 3

$$\text{DC-IR increase rate [\%]} = (\text{DC-IR after 400 cycles} / \text{DC-IR after 1 cycle}) * 100$$

(Table 2)

| | Rapid charge characteristics of rechargeable lithium battery cells | |
|---|---|---|
| | Capacity retention rate @ 25 °C, 400 Cyc. | DC-IR increase rate @ 25°C, 400 Cyc. |
| Ex. 1 | 65% | 33% |
| Ex. 2 | 72% | 26% |
| Ex. 3 | 66% | 31% |
| Ex. 4 | 67% | 27% |
| Ex. 5 | 68% | 28% |
| Comp. Ex. 1 | 57% | 43% |
| Comp. Ex. 2 | 59% | 40% |
| Comp. Ex. 3 | 63% | 34% |
| Comp. Ex. 4 | 61% | 36% |
| Comp. Ex. 5 | 59% | 39% |
| Comp. Ex. 6 | 64% | 34% |
| Comp. Ex. 7 | 60% | 37% |

According to Table 2, the cycle-life of each of the rechargeable lithium battery cells according to Examples 1 to 5 is improved and DC-IR increase is suppressed or reduced even if fast charging at high voltage.

The electrolytes according to one or more embodiments represented by Examples 1 to 5 can suppress or reduce the growth of lithium dendrites and/or the deterioration of the rechargeable lithium battery even if the charging voltage is increased and/or rapidly charged.

In addition, it is also possible to control the effect by adjusting the amounts of the first additive and the second additive with reference to Examples 1 to 5.

**Reference Numerals**

| | | | |
|---|---|---|---|
| 100: | rechargeable lithium battery | 10: | positive electrode |
| 11: | positive electrode lead tab | 12: | positive terminal |
| 20: | negative electrode | 21: | negative electrode lead tab |
| 22: | negative terminal | 30: | separator |
| 40: | electrode assembly | 50: | case |
| 60: | sealing member | 70: | electrode tab |
| 71: | positive electrode tab | 72: | negative electrode tab |

**Claims**

**1.** An electrolyte for a rechargeable lithium battery (100) comprising a non-aqueous organic solvent;

a lithium salt; and
an additive;
wherein the additive comprises:

a first additive represented by Chemical Formula 1, and
a second additive represented by Chemical Formula 2:

Chemical Formula 1

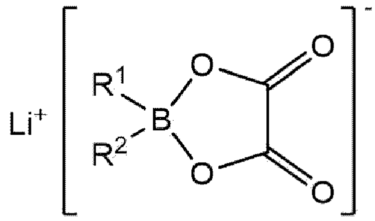

wherein, in Chemical Formula 1, $R^1$ and $R^2$ are each independently a halogen; or an alkyl group having 1 to 20 carbon atoms substituted or unsubstituted with a halogen,

Chemical Formula 2

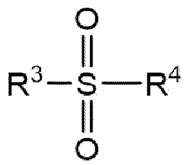

wherein, in Chemical Formula 2, $R^3$ and $R^4$ are each independently a substituted or unsubstituted aryl group having 6 to 20 carbon atoms,
wherein "substituted" refers to replacement of at least one hydrogen atom of a substituent from among a halogen atom, a hydroxyl group, a C1 to C20 alkoxy group, a nitro group, a cyano group, an amine group, an imino group, an azido group, an amidino group, a hydrazino group, a hydrazono group, a carbonyl group, a carbamyl group, a thiol group, an ester group, an ether group, a carboxyl group or a salt thereof, a sulfonic acid group or a salt thereof, a phosphoric acid or a salt thereof, a C1 to C20 alkyl group, a C2 to C20 alkenyl group, a C2 to C20 alkynyl group, a C6 to C30 aryl group, a C3 to C20 cycloalkyl group, a C3 to C20 cycloalkenyl group, a C3 to C20 cycloalkynyl group, a C2 to C20 heterocycloalkyl group, a C2 to C20 heterocycloalkenyl group, and a C2 to C20 heterocycloalkynyl group.

**2.** The electrolyte as claimed in claim 1, wherein
$R^1$ and $R^2$ are each independently: a fluoro group; or an alkyl group having 1 to 10 carbon atoms substituted or unsubstituted with a fluoro group.

**3.** The electrolyte as claimed in claim 1, wherein
Chemical Formula 1 is represented by Chemical Formula 1-1:

Chemical Formula 1-1

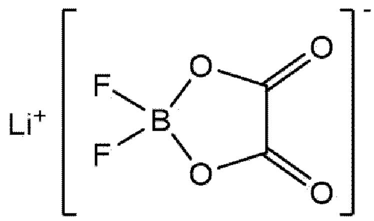.

**4.** The electrolyte as claimed in any one of the preceding claims, wherein
the first additive is included in an amount of 0.1 wt% to 10 wt% based on a total amount of the electrolyte.

**5.** The electrolyte as claimed in any one of the preceding claims, wherein Chemical Formula 2 is represented by

Chemical Formula 2-1:

Chemical Formula 2-1

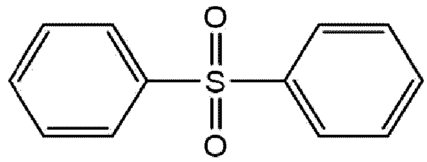

.

6. The electrolyte as claimed in any one of the preceding claims, wherein the second additive is included in an amount of 0.1 wt% to 10 wt% based on a total amount of 100% of the electrolyte.

7. The electrolyte as claimed in any one of the preceding claims, wherein a weight ratio of the first additive and the second additive is 10:1 to 1:10.

8. The electrolyte as claimed in any one of the preceding claims, wherein

the additive further comprises a third additive, and
the third additive further comprises cyclic carbonate, succinonitrile (SN), adiponitrile (AN), 1,3,6-hexane tricyanide (HTCN), propenesultone (PST), propanesultone (PS), lithium tetrafluoroborate ($LiBF_4$), lithium difluorophosphate ($LiPO_2F_2$), 2-fluoro biphenyl (2-FBP), or a combination thereof.

9. The electrolyte as claimed in any one of the preceding claims, wherein the non-aqueous organic solvent comprises ethylene carbonate (EC), propylene carbonate (PC), and propyl propionate (PP).

10. The electrolyte as claimed in claim 9, wherein based on a total volume of 100 volume% the non-aqueous organic solvent, the ethylene carbonate (EC) is included in an amount of 1 volume% to 20 volume%, the propylene carbonate (PC) is included in an amount of 5 volume% to 30 volume%, and the propyl propionate (PP) is included in an amount of 50 volume% to 90 volume%.

11. The electrolyte as claimed in any one of the preceding claims, wherein the lithium salt is $LiPF_6$.

12. The electrolyte as claimed in any one of the preceding claims, wherein a concentration of the lithium salt is 0.1 M to 2.0 M.

13. A rechargeable lithium battery (100), comprising:

a positive electrode (10) comprising a positive electrode active material;
a negative electrode (20) comprising a negative electrode active material; and
the electrolyte as claimed in claim 1.

14. The rechargeable lithium battery (100) as claimed in claim 13, wherein the positive electrode active material comprises lithium nickel-based oxide, lithium cobalt-based oxide, lithium manganese-based oxide, a lithium iron phosphate-based compound, cobalt-free lithium nickel-manganese-based oxide, or a combination thereof.

15. The rechargeable lithium battery as claimed in claim 13 or 14, wherein the negative electrode active material comprises a carbon-based negative electrode active material, a Si-based negative electrode active material, or a combination thereof.

FIG. 1

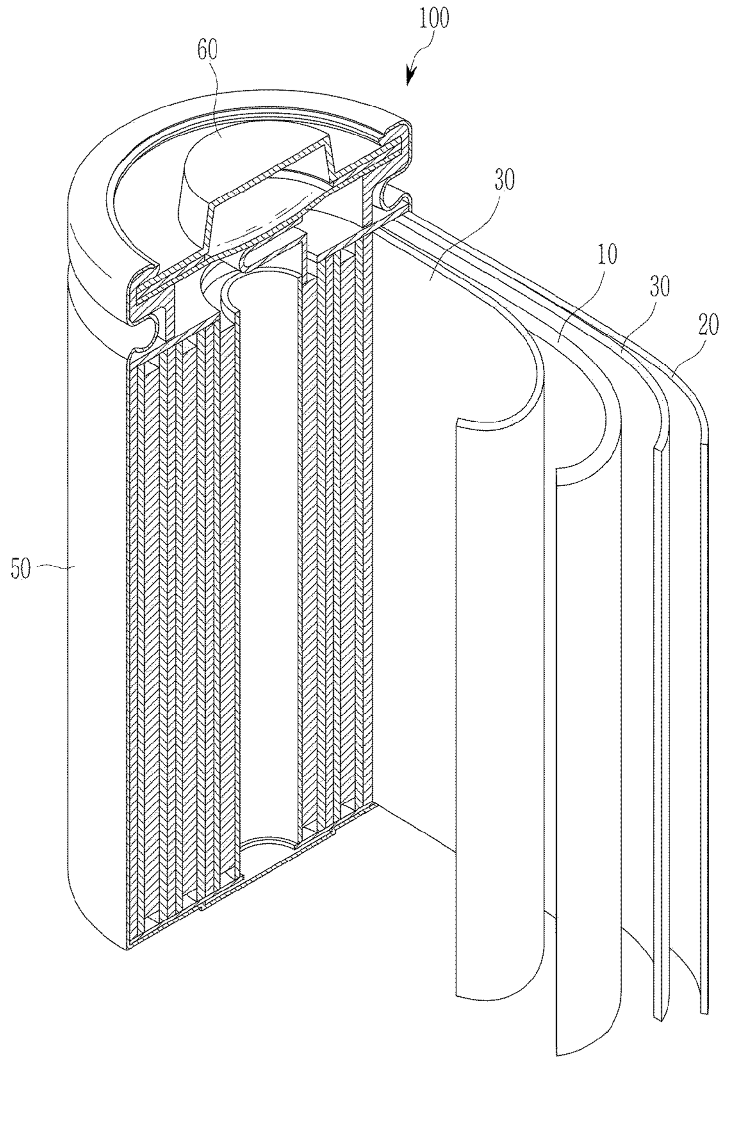

FIG. 2

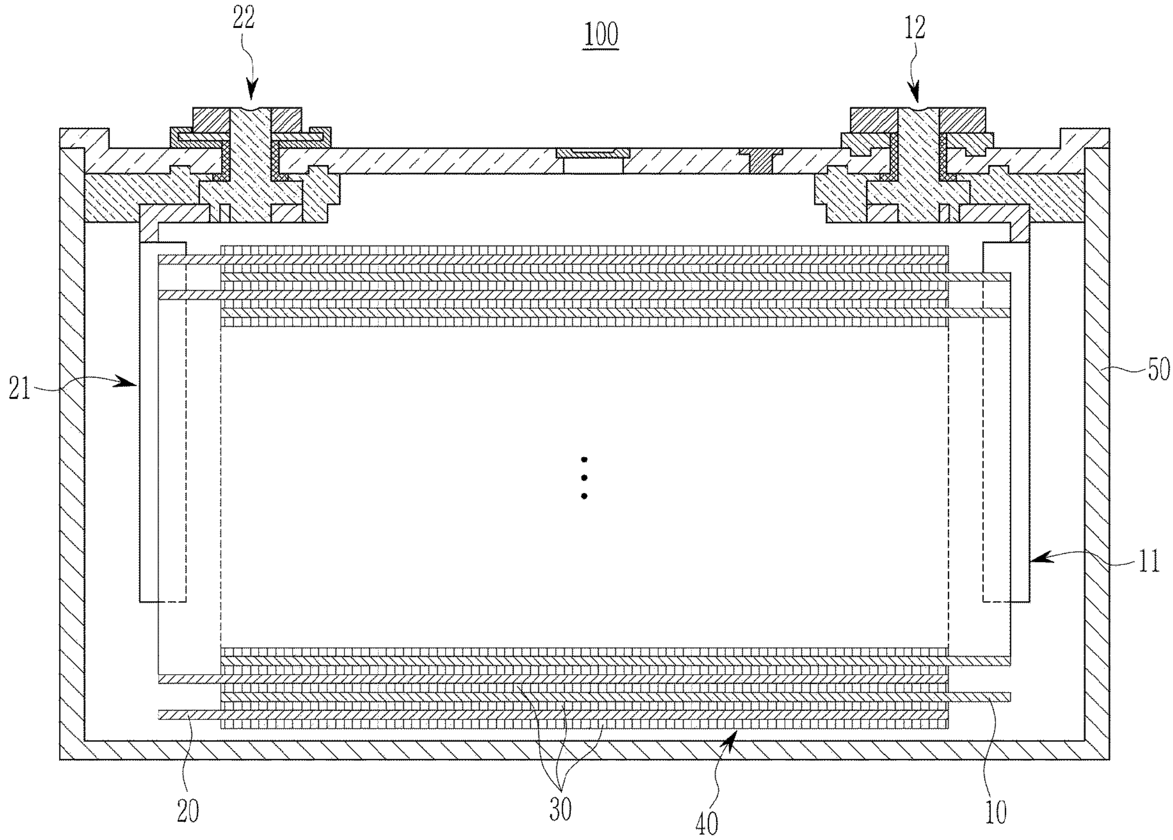

FIG. 3

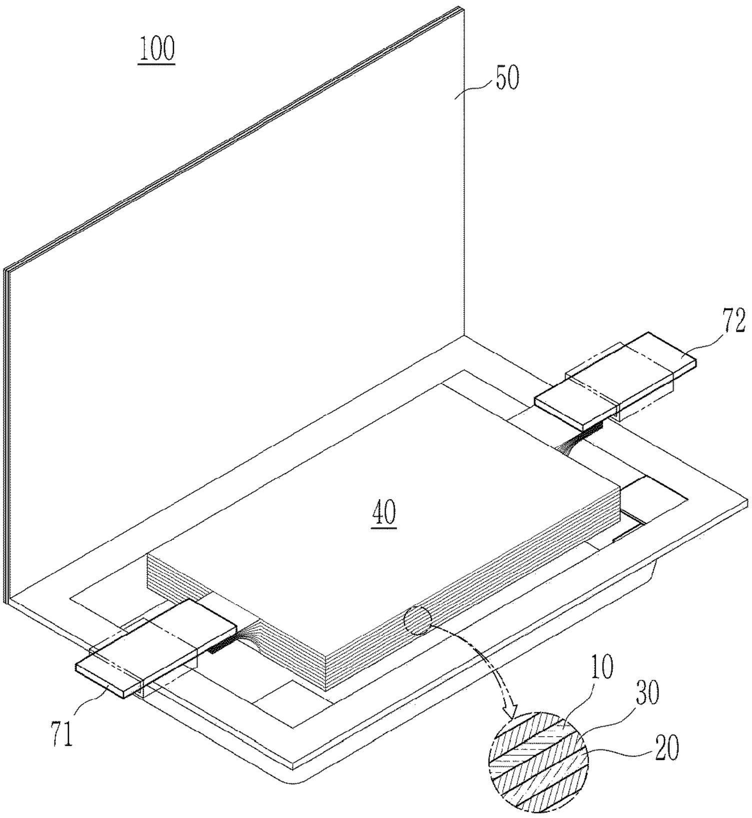


FIG. 4

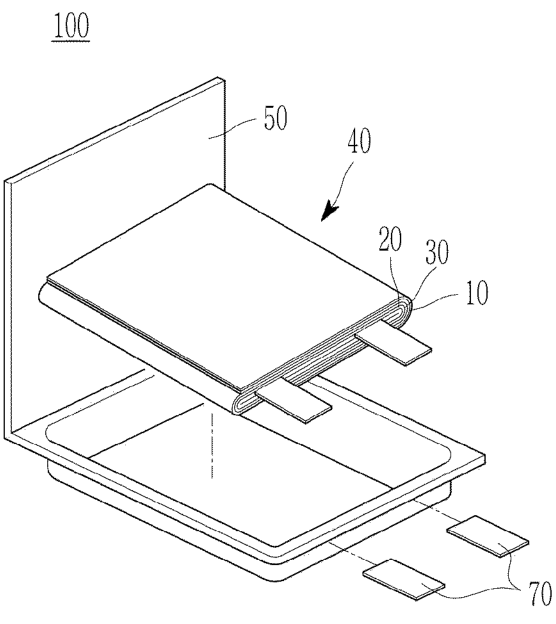

Europäisches Patentamt
European Patent Office
Office européen des brevets

# EUROPEAN SEARCH REPORT

Application Number
EP 24 22 2032

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>A | CN 117 728 028 A (SVOLT ENERGY TECH CO LTD) 19 March 2024 (2024-03-19)<br>* claims 1-10 *<br>* example 1 *<br>----- | 1-9, 11-15<br>10 | INV.<br>H01M10/0525<br>H01M10/0567 |
| | | | TECHNICAL FIELDS SEARCHED (IPC) |
| | | | H01M |

The present search report has been drawn up for all claims

| Place of search | Date of completion of the search | Examiner |
|---|---|---|
| The Hague | 27 May 2025 | Domínguez Gutiérrez |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

4

EPO FORM 1503 03.82 (P04C01)

## ANNEX TO THE EUROPEAN SEARCH REPORT ON EUROPEAN PATENT APPLICATION NO. EP 24 22 2032

This annex lists the patent family members relating to the patent documents cited in the above-mentioned European search report. The members are as contained in the European Patent Office EDP file on
The European Patent Office is in no way liable for these particulars which are merely given for the purpose of information.

27-05-2025

| Patent document cited in search report | Publication date | Patent family member(s) | Publication date |
|---|---|---|---|
| CN 117728028 A | 19-03-2024 | NONE | |

EPO FORM P0459

For more details about this annex : see Official Journal of the European Patent Office, No. 12/82